# EUROPEAN PATENT APPLICATION

(11) **EP 4 811 414 A1**
(43) Date of publication of application: **23.09.2026**
(21) Application number: 24909855.9
(22) Date of filing: 16.08.2024
(51) Int. Cl.: H01H 71/02, H01H 73/18, H02B 1/04

(54) **CIRCUIT BREAKER AND POWER APPARATUS**

(30) Priority: 29.12.2023 CN 202311871294
(71) Applicant: Huawei Digital Power Technologies Co., Ltd., Shenzhen, Guangdong 518043 (CN)
(72) Inventor: LIAO, Chuancan, Shenzhen, Guangdong 518043 (CN); SUN, Jisheng, Shenzhen, Guangdong 518043 (CN); GUI, Xin, Shenzhen, Guangdong 518043 (CN); ZHANG, Xiufeng, Shenzhen, Guangdong 518043 (CN); ZHAO, Fugao, Shenzhen, Guangdong 518043 (CN); XIA, Quanfei, Shenzhen, Guangdong 518043 (CN)
(74) Representative: Epping - Hermann - Fischer
(86) International application number: PCT/CN2024/112862
(87) International publication number: WO 2025/138904

(57) **Abstract**

This application provides a circuit breaker and an electric power device. The circuit breaker includes an outer shell, an operating handle, an operating mechanism, a current-carrying component, an arc-quenching chamber, and an arc-extinguishing module. The operating handle, the operating mechanism, the current-carrying component, the arc-quenching chamber, and the arc-extinguishing module are sequentially disposed in a depth direction of the circuit breaker. The current-carrying component includes a moving contact component and a fixed contact. The operating mechanism is connected to the moving contact component. The operating handle is configured to control the operating mechanism to drive a gas-generating connecting rod of the moving contact component to rotate, for a moving contact and the fixed contact to be in contact or be separated. The arc-quenching chamber is configured to extinguish an electric arc generated when the moving contact and the fixed contact are separated. The arc-extinguishing module is configured to purify a gas jetting from the arc-quenching chamber. Mechanisms of the circuit breaker in this application are disposed in the depth direction of the circuit breaker, leading to a small dimension in a height direction, so that a quantity of circuit breakers that can be laid out in a cabinet is increased. When the moving contact and the fixed contact are separated, the gas-generating connecting rod is configured to form a gas blast for the electric arc to pass through the arc-quenching chamber in the depth direction to extinguish the arc, thereby improving safety of the circuit breaker.

## Description

### CROSS-REFERENCE TO RELATED APPLICATIONS

This application claims priority to Chinese Patent Application No. 202311871294.0, filed with the China National Intellectual Property Administration on December 29, 2023 and entitled "CIRCUIT BREAKER AND ELECTRIC POWER DEVICE", which is incorporated herein by reference in its entirety.

### TECHNICAL FIELD

This application relates to the field of communication device technologies, and in particular, to a circuit breaker and an electric power device.

### BACKGROUND

As technologies such as artificial intelligence (artificial intelligence, AI), 5.5G, and autonomous driving are gradually applied in people's daily life and work, requirements of these technologies for computing power increase significantly. A data center, as a critical area supported by computing power, requires ultra-high capacity and high density. As an indispensable core unit in a modern data center, an uninterruptible power supply (uninterruptible power supply, UPS) is further miniaturized to keep pace with the trend of upgraded capacity and high density.

In a power supply and distribution system in the data center, a circuit breaker is usually required for electric energy distribution. As a key component in the power supply and distribution system, the circuit breaker can control a circuit to be connected or disconnected, and further has a specific protection function. Specifically, a mechanical switch may be provided in the circuit breaker, and an operator may operate the mechanical switch to switch the circuit breaker between a closed state and an open state, making the circuit connected or disconnected. In addition, when a fault such as overload or a short circuit occurs in the circuit, the circuit breaker can automatically switch to the open state to cut off a current in the circuit, implementing the protection function.

For the data center, a further decrease in a volume and power consumption of a power conversion module leads to an increase in a current level. However, limited internal space of an existing cabinet imposes significant constraints on layouts and a quantity of circuit breakers, making it challenging to meet a higher requirement for a running current.

### SUMMARY

This application provides a circuit breaker and an electric power device. An overall size of the circuit breaker is adjusted to change space occupied by the circuit breaker in a cabinet, thereby increasing a quantity of circuit breakers that can be laid out in the cabinet, and improving safety of the circuit breaker.

According to a first aspect, this application provides an electric power device. The electric power device includes a cabinet, and a plurality of circuit breakers and a plurality of power modules that are located in the cabinet, where the plurality of circuit breakers are disposed sequentially in the cabinet in a width direction of the cabinet, a height direction of the circuit breaker is the same as the width direction of the cabinet, a width direction of the circuit breaker is the same as a height direction of the cabinet, and a depth direction of the circuit breaker is the same as a depth direction of the cabinet. Specifically, the circuit breaker includes an outer shell, an operating handle, an operating mechanism, a current-carrying component, an arc-quenching chamber, and an arc-extinguishing module. The operating handle is connected to the operating mechanism, and the current-carrying component includes a moving contact component and a fixed contact. A part that is of the operating handle and that is at least close to the operating mechanism, the operating mechanism, the moving contact component, the arc-quenching chamber, and the arc-extinguishing module are disposed sequentially in the outer shell in the depth direction of the circuit breaker, and the fixed contact is located, in the depth direction of the circuit breaker, on a side that is of the moving contact component and that is away from the operating mechanism. The moving contact component includes a gas-generating connecting rod and a moving contact, the gas-generating connecting rod is rotatably connected to the outer shell, and the moving contact and the gas-generating connecting rod are relatively fixed. The operating mechanism is connected to the moving contact component, and the operating handle is configured to control the operating mechanism to drive the gas-generating connecting rod of the moving contact component to rotate relative to the outer shell, for the moving contact and the fixed contact to be in contact or be separated. The arc-quenching chamber is configured to extinguish an electric arc generated when the moving contact and the fixed contact are separated. The arc-quenching chamber includes a plurality of arc-quenching sheets disposed sequentially in the height direction of the circuit breaker. The fixed contact is located on one side of the plurality of arc-quenching sheets in the height direction of the circuit breaker. A moving track of the moving contact extends in the height direction of the circuit breaker from the fixed contact to the other side of the plurality of arc-quenching sheets. The arc-extinguishing module is configured to purify a gas jetting from the arc-quenching chamber. An arc-jetting vent is provided between the arc-extinguishing module and the arc-quenching chamber, the arc-jetting vent communicates the arc-quenching chamber and the arc-extinguishing module, and the arc-jetting vent is provided close to the other side of the arc-quenching sheets. The gas-generating connecting rod is configured to form a gas blast toward the arc-jetting vent.

The circuit breaker has a circuit breaker operating surface for an operator to perform operations such as a closing operation and an opening operation, and checking operating status of the circuit breaker. In a plane on which the circuit breaker operating surface is located, a dimension of the circuit breaker in a direction of pushing the operating handle is a height, and a dimension that is of the circuit breaker and that is perpendicular to the height direction is a width. A dimension of the circuit breaker in a direction perpendicular to the circuit breaker operating surface is a depth. The circuit breaker in this application may be used in a power supply and distribution system, and the circuit breaker may be specifically mounted in a cabinet. Similarly, the cabinet has a user operating surface for an operator to perform operations such as a control operation, mounting and removing, or maintenance. The circuit breaker operating surface of the circuit breaker faces a same direction as the user operating surface. A state in which the cabinet is placed on the ground is used as an example. In a plane on which the user operating surface is located, a dimension that is of the cabinet and that is parallel to the ground is a width, and a dimension that is of the cabinet and that is perpendicular to the ground is a height. A dimension that is of the cabinet and that is perpendicular to the user operating surface is a depth. When the plurality of circuit breakers are mounted in the cabinet, these circuit breakers are placed in parallel in the width direction of the cabinet, where the circuit breaker operating surface of the circuit breaker faces the same direction as the user operating surface of the cabinet, the height direction of each circuit breaker is the same as the width direction of the cabinet, the width direction of each circuit breaker is the same as the height direction of the cabinet, and the depth direction of each circuit breaker is the same as the depth direction of the cabinet, that is, each circuit breaker is placed horizontally in the cabinet.

In the electric power device in this application, that the part that is of the operating handle and that is close to the operating mechanism, the operating mechanism, the moving contact, the arc-quenching chamber, and an arc-extinguishing module of the circuit breaker are disposed in the depth direction of the circuit breaker may be understood as that the part of the operating handle, the operating mechanism, the moving contact component, the arc-quenching chamber, and the arc-extinguishing module are disposed in the depth direction of the circuit breaker in a layered form. In this way, component layouts of the circuit breaker in the height direction can be reduced, reducing the height of the circuit breaker, thereby reducing space occupied by the circuit breaker, and increasing a quantity of circuit breakers that can be laid out in the cabinet. The circuit breaker includes a first layer (an electric operation layer or a manual operation layer), a second layer (an operation layer), a third layer (a current-carrying layer), a fourth layer (an arc-quenching layer), and a fifth layer (an arc-extinguishing layer). During specific configuration of the circuit breaker, the operating handle is located on the first layer, the operating mechanism is located on the second layer, the current-carrying component is located on the third layer, the arc-quenching chamber is located on the fourth layer, and the arc-extinguishing module is located on the fifth layer. In addition, in the electric power device in this application, a gas-generating material, eroded by an electric arc, generates a large amount of gas, causing a pressure increase at a position at which the gas-generating material is eroded, so that there is a pressure difference between the position and a surrounding environment, and then a gas flow from the position to a low-pressure environment is formed. The flowing gas flow is referred to as a gas blast. The gas-generating material includes, but is not limited to, a composite material, a ceramic material, or another new material. In the fourth layer (the arc-quenching layer), when the moving contact and the fixed contact are separated, an electric arc is generated between the moving contact and the fixed contact, and the gas-generating connecting rod made of the gas-generating material generates a large amount of gas under erosion effect of the electric arc, causing a pressure increase around the gas-generating connecting rod, and leading to a pressure difference from the outside of the circuit breaker. As a result, a gas blast for the electric arc is formed through the arc-jetting vent. Under the effect of the gas blast, the electric arc passes through the plurality of arc-quenching sheets, during which a temperature of the electric arc is reduced, so that energy of the electric arc is fully cooled down, and a high arc voltage is generated, to extinguish the electric arc, thereby improving arc-extinguishing safety of the circuit breaker.

In a possible implementation, a separator plate is disposed in the outer shell. The separator plate is located between the operating mechanism and the arc-quenching chamber, and extends in the height direction of the circuit breaker. The separator plate is configured to separate the operating mechanism from the arc-quenching chamber, and the separator plate is provided with an opening. An end that is of the gas-generating connecting rod and that is close to the arc-quenching chamber is provided with a baffle plate, and an end of the connecting rod is disposed close to the operating mechanism and is rotatably connected to the outer shell. The baffle plate is located on a side that is of the opening and that is close to the operating mechanism. The baffle plate is configured to always cover the opening in a process in which the operating mechanism drives the gas-generating connecting rod to rotate relative to the outer shell. In this implementation, a side that is of the arc-quenching chamber and that is close to the operating mechanism is closed space, so that the only outlet of the arc-quenching chamber is the arc-jetting vent. Therefore, when the moving contact and the fixed contact are separated, a gas blast generated by the gas-generating connecting rod is in a direction from a side that is of the arc-quenching chamber and that is close to the operating mechanism to a side that is of the arc-quenching chamber and that is close to the arc-extinguishing module, and finally flows out from the arc-jetting vent.

When the arc-quenching chamber is specifically disposed, the plurality of arc-quenching sheets are disposed in an arc shape. In the height direction of the circuit breaker, an arc-quenching sheet on a side that is of the plurality of arc-quenching sheets and that is close to the fixed contact is disposed close to the arc-extinguishing module, and an arc-quenching sheet on a side that is of the plurality of arc-quenching sheets and that is away from the fixed contact is disposed close to the operating mechanism. In a process in which the moving contact rotates relative to the outer shell to be in contact with or be separated from the fixed contact, a moving track of the moving contact is in an arc shape, and an arrangement shape of the plurality of arc-quenching sheets matches the moving track of the moving contact, so that the moving contact always keeps a specified distance from the arc-quenching sheets during movement, helping an electric arc pass through the arc-quenching sheets under the effect of a gas blast, thereby achieving good arc-extinguishing effect.

When an arrangement manner of the plurality of arc-quenching sheets is specifically set, in a possible implementation, the plurality of arc-quenching sheets are disposed in parallel. In another possible implementation, in the plurality of arc-quenching sheets, for at least two arc-quenching sheets close to the arc-jetting vent, a distance that is between the at least two arc-quenching sheets and that is on a side close to the operating mechanism is less than a distance that is between the at least two arc-quenching sheets and that is on a side close to the arc-jetting vent.

In a possible implementation, the arc-quenching chamber further includes two gas-generating sheets opposite to each other in the width direction of the circuit breaker. The gas-generating sheet extends in the height direction of the circuit breaker, and the two gas-generating sheets are configured to form gas blasts toward the arc-jetting vent. The moving track of the moving contact is between the two gas-generating sheets. When the moving contact rotates relative to the outer shell, the moving contact is always located between the two gas-generating sheets. In this case, in a process in which the moving contact and the fixed contact are separated, the gas-generating sheets on two sides of the moving contact generate gas blasts under erosion effect of the electric arc, so that the electric arc generated when the moving contact and the fixed contact are separated is always blown to the arc-quenching sheets, to extinguish the electric arc in time.

In a possible implementation, the arc-quenching chamber further includes two support plates opposite to each other in the width direction of the circuit breaker, the plurality of arc-quenching sheets are separately connected between the two support plates, and the two support plates are configured to support and fasten the plurality of arc-quenching sheets.

In a possible implementation, the arc-quenching chamber further includes two arc-guiding plates. The two arc-guiding plates are disposed opposite to each other on two sides of the plurality of arc-quenching sheets in the height direction of the circuit breaker. One arc-guiding plate is configured to guide an electric arc around the fixed contact to the arc-quenching sheets, and the other arc-guiding plate is configured to guide an electric arc around the moving contact to the arc-quenching sheets, so that the generated electric arcs are guided to the arc-quenching sheets as soon as possible to extinguish the arcs.

In a possible implementation, the two arc-guiding plates may specifically include a first arc-guiding plate and a second arc-guiding plate. The first arc-guiding plate is disposed away from the fixed contact and is L-shaped. Specifically, the first arc-guiding plate includes a first arc-guiding portion and a second arc-guiding portion that are perpendicular to each other. The first arc-guiding portion and the second arc-guiding plate are disposed opposite to each other on the two sides of the plurality of arc-quenching sheets, the second arc-guiding plate is disposed close to the fixed contact, and the second arc-guiding portion extends in the height direction of the circuit breaker and is disposed close to the operating mechanism. In this way, the first arc-guiding plate may be disposed close to the moving track of the moving contact, and the second arc-guiding plate may be disposed close to the fixed contact, to guide an electric arc in time.

In a possible implementation, a side that is of each arc-quenching sheet and that is close to the operating mechanism is provided with an arc-guiding notch, and projections of arc-guiding notches of two adjacent arc-quenching sheets in the height direction of the circuit breaker do not overlap, so that a path of an electric arc passing through arc-guiding notches of two adjacent arc-quenching sheets is increased, increasing a length of the electric arc for the electric arc to be in full contact with the arc-quenching sheets, thereby helping accelerate cooling and extinction of the electric arc.

In a possible implementation, the current-carrying component further includes a first gas-generating plate. The fixed contact is disposed on a surface of a side that is of the first gas-generating plate and that is close to the plurality of arc-quenching sheets, and the first gas-generating plate is configured to form a gas blast toward the arc-jetting vent. In the height direction of the circuit breaker, the fixed contact is located between the first gas-generating plate and the plurality of arc-quenching sheets, so that the gas blast generated by the first gas-generating plate can directly blow an electric arc around the fixed contact to the arc-quenching sheets.

In a possible implementation, the current-carrying component further includes a second gas-generating plate. The second gas-generating plate is disposed on the surface of the side that is of the first gas-generating plate and that is close to the plurality of arc-quenching sheets, and is disposed, in the depth direction of the circuit breaker, on a side that is of the fixed contact and that is close to the operating mechanism, and the second gas-generating plate is configured to form a gas blast toward the arc-jetting vent. Therefore, the first gas-generating plate and the second gas-generating plate can form a plurality of gas blasts around the fixed contact, increasing effect of blowing an arc by a generated gas.

In a possible implementation, the electric power device further includes a circuit board located in the cabinet, the circuit board and the plurality of circuit breakers are disposed sequentially in the depth direction of the cabinet, and the circuit board is disposed close to the arc-extinguishing module. The arc-extinguishing module can adsorb electrical free ions jetting from the arc-quenching chamber, so that the circuit breaker can implement completely no arc jetting through a gas jetting from the arc-extinguishing module, avoiding an adverse impact on the circuit board of the electric power device.

In a possible implementation, the arc-extinguishing module includes a module housing and a plurality of arc-extinguishing sheets located in the module housing. A specific distribution manner of the plurality of arc-extinguishing sheets is not limited. For example, the plurality of arc-extinguishing sheets may be disposed in parallel in the depth direction of the circuit breaker, or the plurality of arc-extinguishing sheets may be disposed in parallel in the height direction of the circuit breaker, or the plurality of arc-extinguishing sheets may be disposed in parallel in the width direction of the circuit breaker, or at least two of the plurality of arc-extinguishing sheets are disposed at an included angle.

In a possible implementation, the plurality of arc-extinguishing sheets are disposed in parallel in the depth direction of the circuit breaker. Each arc-extinguishing sheet is provided with a plurality of holes, and projections of holes of two adjacent arc-extinguishing sheets in the depth direction of the circuit breaker do not overlap, to improve a capability of the arc-extinguishing module to adsorb electrical free ions.

The arc-extinguishing module is an independent module. The arc-extinguishing module and the outer shell are in a connection, and the connection includes a threaded connection, snap fitting, riveting, or bonding. In a possible implementation, the arc-extinguishing module is snap-fitted to the outer shell. Specifically, a snap-fitting groove is provided inside the outer shell, a snap-fitting protrusion is provided on an outer wall of the arc-extinguishing module, and the snap-fitting protrusion is accommodated in the snap-fitting groove, or the outer shell may be fastened to the outer wall in another manner.

According to a second aspect, this application provides a circuit breaker. The circuit breaker includes an outer shell, an operating handle, an operating mechanism, a current-carrying component, an arc-quenching chamber, and an arc-extinguishing module. The operating handle is connected to the operating mechanism, and the current-carrying component includes a moving contact component and a fixed contact. A part that is of the operating handle and that is at least close to the operating mechanism, the operating mechanism, the moving contact component, the arc-quenching chamber, and the arc-extinguishing module are disposed sequentially in the outer shell in a depth direction of the circuit breaker, and the fixed contact is located, in the depth direction of the circuit breaker, on a side that is of the moving contact component and that is away from the operating mechanism. The moving contact component includes a gas-generating connecting rod and a moving contact, the gas-generating connecting rod is rotatably connected to the outer shell, and the moving contact and the gas-generating connecting rod are relatively fixed. The operating mechanism is connected to the moving contact component, and the operating handle is configured to control the operating mechanism to drive the gas-generating connecting rod of the moving contact component to rotate relative to the outer shell, for the moving contact and the fixed contact to be in contact or be separated. The arc-quenching chamber is configured to extinguish an electric arc generated when the moving contact and the fixed contact are separated. The arc-quenching chamber includes a plurality of arc-quenching sheets disposed sequentially in a height direction of the circuit breaker. The fixed contact is located on one side of the plurality of arc-quenching sheets in the height direction of the circuit breaker. A moving track of the moving contact extends in the height direction of the circuit breaker from the fixed contact to the other side of the plurality of arc-quenching sheets. The arc-extinguishing module is configured to purify a gas jetting from the arc-quenching chamber. An arc-jetting vent is provided between the arc-extinguishing module and the arc-quenching chamber, the arc-jetting vent communicates the arc-quenching chamber and the arc-extinguishing module, and the arc-jetting vent is provided close to the other side of the arc-quenching sheets. The gas-generating connecting rod is configured to form a gas blast toward the arc-jetting vent.

In the circuit breaker in this application, that the part that is of the operating handle and that is close to the operating mechanism, the operating mechanism, the moving contact, the arc-quenching chamber, and the arc-extinguishing module are disposed in the depth direction of the circuit breaker may be understood as that the part of the operating handle, the operating mechanism, the moving contact component, the arc-quenching chamber, and the arc-extinguishing module are disposed in the depth direction of the circuit breaker in a layered form. In this way, component layouts of the circuit breaker in the height direction can be reduced, reducing the height of the circuit breaker, thereby reducing space occupied by the circuit breaker, and increasing a quantity of circuit breakers that can be laid out in the cabinet. The circuit breaker includes a first layer (an electric operation layer or a manual operation layer), a second layer (an operation layer), a third layer (a current-carrying layer), a fourth layer (an arc-quenching layer), and a fifth layer (an arc-extinguishing layer). During specific configuration of the circuit breaker, the operating handle is located on the first layer, the operating mechanism is located on the second layer, the current-carrying component is located on the third layer, the arc-quenching chamber is located on the fourth layer, and the arc-extinguishing module is located on the fifth layer. In the fourth layer (the arc-quenching layer), when the moving contact and the fixed contact are separated, an electric arc is generated between the moving contact and the fixed contact, and the gas-generating connecting rod generates a large amount of gas under erosion effect of the electric arc, causing a pressure increase around the gas-generating connecting rod, and leading to a pressure difference from the outside of the circuit breaker. As a result, a gas blast for the electric arc is formed through the arc-jetting vent. Under the effect of the gas blast, the electric arc passes through the plurality of arc-quenching sheets, during which a temperature of the electric arc is reduced, so that energy of the electric arc is fully cooled down, and a high arc voltage is generated, to extinguish the electric arc, thereby improving arc-extinguishing safety of the circuit breaker.

### BRIEF DESCRIPTION OF DRAWINGS

FIG. 1 is a diagram of an application scenario of a circuit breaker according to an embodiment of this application;
FIG. 2 is a diagram of an electric power device according to an embodiment of this application;
FIG. 3 is a diagram of a circuit breaker according to an embodiment of this application;
FIG. 4 is another diagram of a circuit breaker according to an embodiment of this application;
FIG. 5 is a cross-sectional view of the circuit breaker in FIG. 3 in a direction of A-A;
FIG. 6 is another diagram of a circuit breaker according to an embodiment of this application;
FIG. 7 is a diagram of a fixed contact component according to an embodiment of this application;
FIG. 8 is another diagram of a fixed contact component according to an embodiment of this application;
FIG. 9 is another diagram of a fixed contact component according to an embodiment of this application;
FIG. 10 is a diagram of an arc-quenching chamber according to an embodiment of this application;
FIG. 11 is a cross-sectional view of the arc-quenching chamber in FIG. 10 in a direction of B-B;
FIG. 12 is another cross-sectional view of the arc-quenching chamber in FIG. 10 in a direction of B-B;
FIG. 13 is a diagram of an arc-extinguishing module according to an embodiment of this application;
FIG. 14 is another diagram of an arc-extinguishing module according to an embodiment of this application;
FIG. 15 is another diagram of an arc-extinguishing module according to an embodiment of this application; and
FIG. 16 is another diagram of an arc-extinguishing module according to an embodiment of this application.

**Reference numerals:**

| | | | | | |
|---|---|---|---|---|---|
| 01: | power supply and distribution system | 02: | power supply module | 10: | electric power device |
| 11: | cabinet | 20: | circuit breaker | 21: | outer shell |
| 22: | operating handle | 23: | operating mechanism | 24: | current-carrying component |
| 25: | arc-quenching | 26: | arc-extinguishing | 27: | separator plate |
| | chamber | | module | | |
| 110: | user operating surface | 210: | circuit breaker operating surface | 211: | limiting protrusion |
| 241: | moving contact component | 242: | fixed contact component | 243: | conducting wire |
| 244: | first copper busbar | 245: | second copper busbar | 246: | first connector |
| 247: | second connector | 251: | arc-quenching sheet | 252: | first gas-generating sheet |
| 253: | second gas-generating sheet | 254: | first support plate | 255: | second support plate |
| 256: | first arc-guiding plate | 257: | second arc-guiding plate | 261: | module housing |
| 262: | arc-extinguishing sheet | 2411: | gas-generating connecting rod | 2412: | moving contact |
| 2413: | baffle plate | 2421: | fixed contact | 2422: | first gas-generating plate |
| 2423: | second gas-generating plate | 2511: | arc-guiding notch | 2611: | snap-fitting protrusion |
| 2571: | gas-generating hole | | | | |

### DESCRIPTION OF EMBODIMENTS

To make the objectives, technical solutions, and advantages of this application clearer, the following further describes this application in detail with reference to the accompanying drawings.

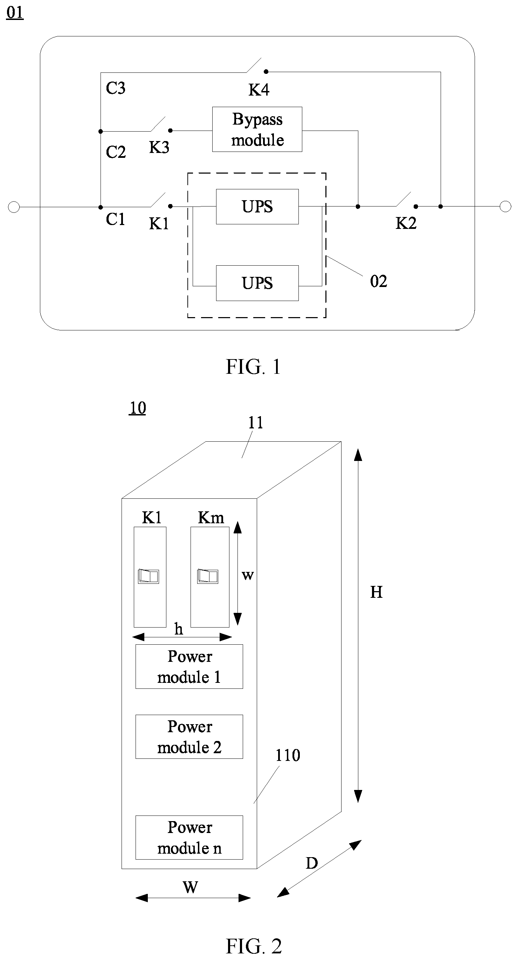

For ease of understanding a circuit breaker and an electric power device provided in embodiments of this application, the following describes an application scenario of the circuit breaker and the electric power device. The circuit breaker and the electric power device provided in embodiments of this application may be widely used in various power supply and distribution systems. FIG. 1 is a diagram of an application scenario of a circuit breaker according to an embodiment of this application. As shown in FIG. 1, in an example provided in this application, the circuit breaker may be used in a power supply and distribution system 01 of a data center, and is configured to make, carry, and cut off a current between a power grid and the data center. The power supply and distribution system 01 may include a power supply module 02 (the power supply module 02 formed by connecting a plurality of UPSs in series and parallel, as shown in FIG. 1) and a plurality of circuit breakers. For example, three circuits are provided in the power supply and distribution system 01, respectively a first circuit C1, a second circuit C2, and a third circuit C3. Each circuit is provided correspondingly with a circuit breaker. The power supply module 02 is connected in the first circuit C1, a first circuit breaker K1 is disposed at an input end of the power supply module 02, and a second circuit breaker K2 is disposed at an output end of the power supply module 02. A bypass module is connected in the second circuit C2, a third circuit breaker K3 is disposed at one end of the bypass module, and the other end of the bypass module is connected to the second circuit breaker K2. The third circuit C3 is a standby circuit and is provided with a fourth circuit breaker K4.

When the circuit between the power grid (or a power supply) and the data center needs to be connected, the first circuit breaker K1 and the second circuit breaker K2 may be switched to a closed state. When the circuit between the power grid and the data center needs to be disconnected, the first circuit breaker K1 or the second circuit breaker K2 may be switched to an open state. In this way, a power-on state and a power-off state of the data center are controlled by controlling the closed state and the open state of the circuit breaker. When a power-consuming device of the data center needs to be overhauled and maintained, the first circuit breaker K1 and the second circuit breaker K2 may be switched to the open state, and the third circuit breaker K3 or the fourth circuit breaker K4 may be switched to the closed state, to facilitate operations such as overhauling and maintenance on the power-consuming device.

In addition, the circuit breaker in this application may also be used in a power supply and distribution system 01 of an enterprise power-consuming device or a public power-consuming device, and is configured to make, carry, and cut off a current between a power grid and the enterprise power-consuming device or the public power-consuming device. For example, when a power-consuming device (such as a 4G base station or a 5G base station) needs to operate normally, an operator may switch a circuit breaker to a closed state, so that a power grid can supply electric energy required for normal operation to the power-consuming device. When the power-consuming device needs to be overhauled and maintained, the operator may switch the circuit breaker to an open state, to facilitate operations such as overhauling and maintenance on the power-consuming device.

The power supply system may specifically include a plurality of electric power devices 10. FIG. 2 is a diagram of an electric power device according to an embodiment of this application. As shown in FIG. 2, each electric power device 10 includes a cabinet 11, and a plurality of power modules and a plurality of circuit breakers (K1, ..., and Km) that are located in the cabinet 11. A side that is of the cabinet 11 and that faces an operator is a user operating surface 110. In this application, a state in which the cabinet 11 is placed on the ground is used as an example. A dimension that is of the user operating surface 110 and that is parallel to the ground is a width, a dimension that is of the user operating surface 110 and that is perpendicular to the ground is a height, and a dimension perpendicular to the user operating surface 110 is a depth. The plurality of power modules are stacked sequentially in a height H direction of the cabinet 11, and the plurality of circuit breakers are placed sequentially on a side of the plurality of power modules in a width W direction of the cabinet 11. The power module is configured to perform power conversion on a voltage from a power grid, to output an adaptive voltage to a load device. Specifically, the power module may be an AC/AC module, or may be an AC/DC module.

In an existing electric power device, due to a limited width and a limited height of a cabinet, a quantity of circuit breakers on a user operating surface 110 side is limited, failing to meet large-capacity and high-density layout requirements of a power supply and distribution system.

Therefore, this application provides a circuit breaker and an electric power device. An overall size of the circuit breaker is adjusted to change space occupied by the circuit breaker in a cabinet, thereby increasing a quantity of circuit breakers that can be laid out in the cabinet, and improving safety of the circuit breaker.

It should be noted that terms used in the following embodiments are merely intended to describe specific embodiments, but are not intended to limit this application. As used in this specification and the appended claims of this application, singular expression forms "one", "a", and "this" are also intended to include expression forms such as "one or more", unless otherwise specified in the context clearly.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "including but not limited to", unless otherwise specifically emphasized in another manner.

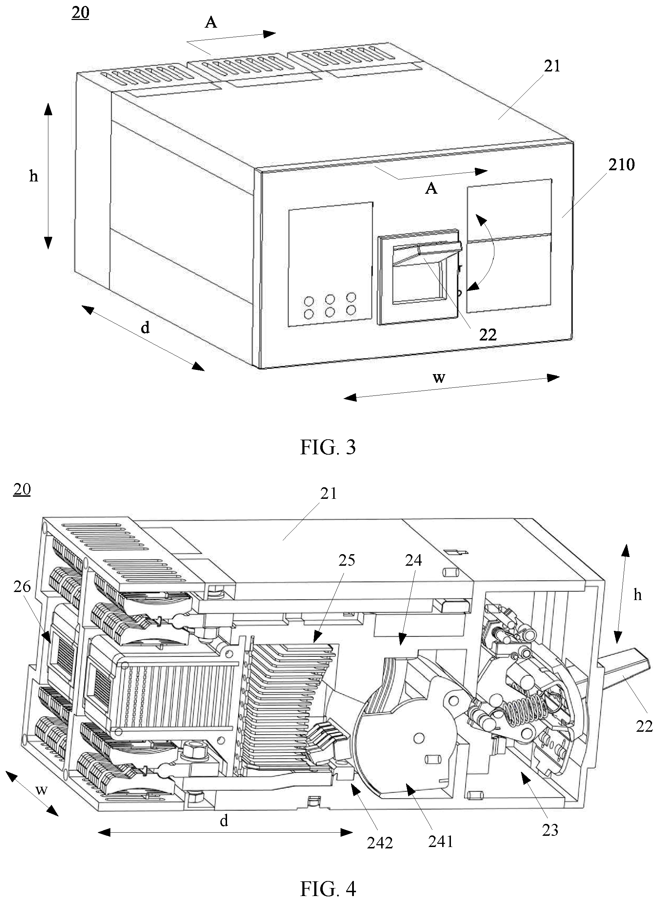

FIG. 3 is a diagram of a circuit breaker according to an embodiment of this application. FIG. 4 is another diagram of a circuit breaker according to an embodiment of this application. FIG. 4 is a cross-sectional view of the circuit breaker in FIG. 3 in a direction of A-A. As shown in FIG. 3 and FIG. 4, a circuit breaker 20 includes an outer shell 21, an operating handle 22, an operating mechanism 23, a current-carrying component 24, an arc-quenching chamber 25, and an arc-extinguishing module 26. Specifically, the operating handle 22 is connected to the operating mechanism 23. The current-carrying component 24 includes a moving contact component 241 and a fixed contact component 242. In an embodiment, an end that is of the operating handle 22 and that is away from the operating mechanism 23 may extend out of the outer shell 21, for an operator to push the operating handle 22 to perform a closing operation and an opening operation. In another embodiment, the outer shell 21 is provided with a rotary knob, to implement opening and closing of the circuit breaker 20 through a manual operation on the rotary knob. Specifically, the end that is of the operating handle 22 and that is away from the operating mechanism 23 is connected to the rotary knob. When the operator performs the manual operation on the rotary knob, the rotary knob rotates and drives the operating handle 22 to be pushed in a height h direction. In still another embodiment, the circuit breaker 20 may further include a remote controller and an electric operating apparatus. The electric operating apparatus is connected to the operating handle 22 and is connected to the remote controller, to implement opening and closing of the circuit breaker 20 through an electric operation. When the operator performs the electric operation, a closing instruction or an opening instruction is sent to the remote controller, and the remote controller can control the electric operating apparatus to push the operating handle 22. In this embodiment, the operator may send an instruction near the circuit breaker 20, or may send an instruction remotely through a communication apparatus. In addition, a part that is of the operating handle 22 and that is at least close to the operating mechanism 23, the operating mechanism 23, the moving contact component 241, the arc-quenching chamber 25, and the arc-extinguishing module 26 are disposed sequentially in the outer shell 21 in a depth d direction of the circuit breaker 20. The fixed contact component 242 includes a fixed contact 2421. In the depth d direction of the circuit breaker 20, the fixed contact 2421 is located on a side that is of the moving contact component 241 and that is away from the operating mechanism 23. In other words, in the depth d direction of the circuit breaker 20, the operating mechanism 23 is located on a side of the operating handle 22, and the operating mechanism 23 and the operating handle 22 are in a transmission connection. The current-carrying component 24 is located on a side that is of the operating mechanism 23 and that is away from the operating handle 22. The moving contact component 241 includes a gas-generating connecting rod 2411 and a moving contact 2412, the gas-generating connecting rod 2411 is rotatably connected to the outer shell 21, and the moving contact 2412 and the gas-generating connecting rod 2411 are relatively fixed. The operating mechanism 23 is connected to the moving contact component 241, and the operating handle 22 is configured to control the operating mechanism 23 to drive the gas-generating connecting rod 2411 of the moving contact component 241 to rotate, to enable the moving contact 2412 to rotate with the gas-generating connecting rod 2411, so that the moving contact 2412 and the fixed contact 2421 are in contact or are separated. The arc-quenching chamber 25 is configured to extinguish an electric arc generated when the moving contact 2412 and the fixed contact 2421 are separated. The arc-quenching chamber 25 includes a plurality of arc-quenching sheets 251 disposed sequentially in the height h direction of the circuit breaker 20. The fixed contact 2421 is located on one side of the plurality of arc-quenching sheets 251 in the height h direction of the circuit breaker 20. A moving track of the moving contact 2412 extends in the height h direction of the circuit breaker 20 from the fixed contact 2421 to the other side of the plurality of arc-quenching sheets 251. The arc-extinguishing module 26 is configured to purify a gas jetting from the arc-quenching chamber 25. An arc-jetting vent is provided between the arc-extinguishing module 26 and the arc-quenching chamber 25, the arc-jetting vent communicates the arc-quenching chamber 25 and the arc-extinguishing module 26, and the arc-jetting vent is provided close to the other side of the arc-quenching sheets 251. The gas-generating connecting rod 2411 is configured to form a gas blast toward the arc-jetting vent.

In this application, a side on which the operating handle 22 extends out of the outer shell 21 is a circuit breaker operating surface 210. The circuit breaker operating surface 210 is used as an example. A dimension of the circuit breaker 20 in a direction of pushing the operating handle 22 is a height, a dimension that is of the circuit breaker 20 and that is perpendicular to the height h direction is a width w, and a dimension that is of the circuit breaker 20 and that is perpendicular to the circuit breaker operating surface 210 is a depth d. A first direction is the depth d direction of the circuit breaker 20. In other words, the operating handle 22, the operating mechanism 23, the current-carrying component 24, the arc-quenching chamber 25, and the arc-extinguishing module 26 are disposed sequentially in the depth d direction of the circuit breaker 20. When the circuit breaker 20 is placed in the cabinet 11, the height h direction of the circuit breaker 20 is the same as the width W direction of the cabinet 11, the width w direction of the circuit breaker 20 is the same as the height H direction of the cabinet 11, and the depth d direction of the circuit breaker 20 is the same as a depth D direction of the cabinet 11. In this case, when an operator performs a closing operation or an opening operation on the circuit breaker 20, the operator pushes the operating handle 22 in the width W direction of the cabinet 11. When the operating handle 22 is pushed to perform the opening operation or the closing operation, the operating mechanism 23 may move with the operating handle 22, to drive the moving contact 2412 to be separated from or be in contact with the fixed contact 2421. When the moving contact 2412 and the fixed contact 2421 are in contact, the circuit breaker 20 is in a closed state. When the moving contact 2412 and the fixed contact 2421 are separated, the circuit breaker 20 is in an open state. In the circuit breaker 20 in this application, the part that is of the operating handle 22 and that is at least close to the operating mechanism 23, the operating mechanism 23, the moving contact component 241, the arc-quenching chamber 25, and the arc-extinguishing module 26 that are disposed in the depth d direction of the circuit breaker 20 are considered to be disposed in a layered form, so that the height h of the circuit breaker 20 can be reduced, and space occupied by the circuit breaker 20 can be reduced, thereby increasing a quantity of circuit breakers 20 that can be laid out in the cabinet 11. Specifically, the operating handle 22 is located on a first layer (an electric operation layer or a manual operation layer), the operating mechanism 23 is located on a second layer (an operation layer), a part of the current-carrying component 24 is located on a third layer (a current-carrying layer), the arc-quenching chamber 25 is located on a fourth layer (an arc-quenching layer), and the arc-extinguishing module 26 is located on a fifth layer (an arc-extinguishing layer). In addition, in the electric power device in this application, a gas-generating material, eroded by an electric arc, generates a large amount of gas, causing a pressure increase at a position at which the gas-generating material is eroded, so that there is a pressure difference between the position and a surrounding environment, and then a gas flow from the position to a low-pressure environment is formed. The flowing gas flow is referred to as a gas blast. The gas-generating material includes, but is not limited to, a composite material, a ceramic material, or another new material. In the fourth layer (the arc-quenching layer), when the moving contact 2412 and the fixed contact 2421 are separated, an electric arc is generated between the moving contact 2412 and the fixed contact 2421, and the gas-generating connecting rod 2411 generates a large amount of gas under erosion effect of the electric arc, causing a pressure increase around the gas-generating connecting rod 2411, and leading to a pressure difference from the outside of the circuit breaker 20. As a result, a gas blast for the electric arc is formed through the arc-jetting vent. Under the effect of the gas blast, the electric arc passes through the plurality of arc-quenching sheets 251, during which a temperature of the electric arc is reduced, so that energy of the electric arc is fully cooled down, and a high arc voltage is generated. When the arc voltage is higher than a current-carrying voltage of the circuit breaker 20, a voltage between the moving contact 2412 and the fixed contact 2421 cannot reach the arc voltage to support the electric arc, so that the electric arc is extinguished, thereby improving arc-extinguishing safety of the circuit breaker 20.

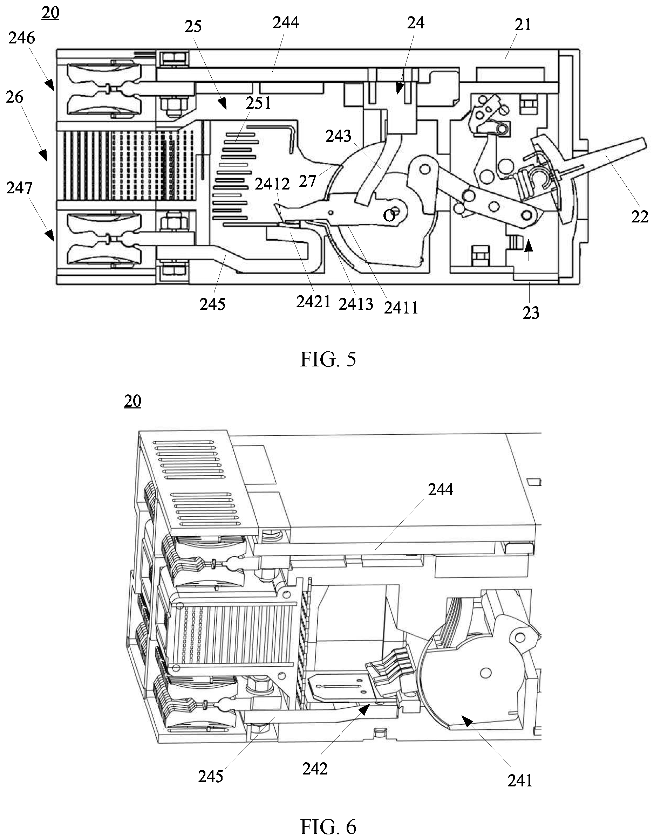

FIG. 5 is a cross-sectional view of the circuit breaker in FIG. 3 in a direction of A-A. As shown in FIG. 5, when the moving contact component 241 is specifically disposed, a separator plate 27 is disposed in the outer shell 21, the separator plate 27 is located between the operating mechanism 23 and the arc-quenching chamber 25, and extends in the height h direction of the circuit breaker 20, and the separator plate 27 is provided with an opening. In the depth d direction of the circuit breaker 20, the gas-generating connecting rod 2411 is located on a side that is of the opening and that is close to the operating mechanism 23, and the gas-generating connecting rod 2411 always covers the opening. Specifically, an end that is of the gas-generating connecting rod 2411 and that is close to the arc-quenching chamber 25 is provided with a baffle plate 2413, and the baffle plate 2413 is located on a side that is of the opening and that is close to the operating mechanism 23. In a process in which the operating mechanism 23 drives the gas-generating connecting rod 2411 to rotate relative to the outer shell 21, the baffle plate 2413 always covers the opening. In this way, the baffle plate 2413 can isolate the operating mechanism 23 from the arc-quenching chamber 25, so that the arc-jetting vent becomes the only outlet of the arc-quenching chamber 25. Therefore, when the moving contact 2412 and the fixed contact 2421 are separated, an end that is of the gas-generating connecting rod 2411 and that is close to the arc-quenching chamber 25 is eroded by an electric arc and then generates a gas blast, and the gas-generating connecting rod 2411 can keep generating the gas blast around the moving contact 2412 because the gas-generating connecting rod 2411 moves with the moving contact 2412. In this case, when the moving contact 2412 and the fixed contact 2421 are separated, the electric arc is continuously blown to the arc-quenching chamber 25 to extinguish the arc, protecting the operating mechanism 23 from electric arc erosion.

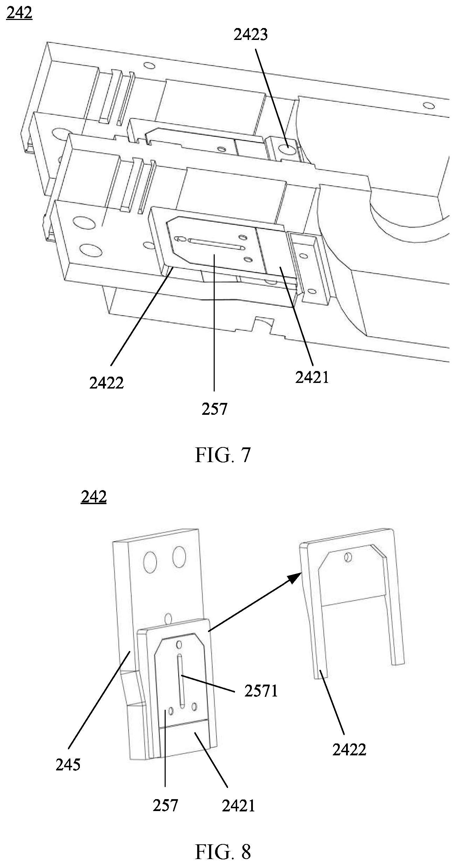

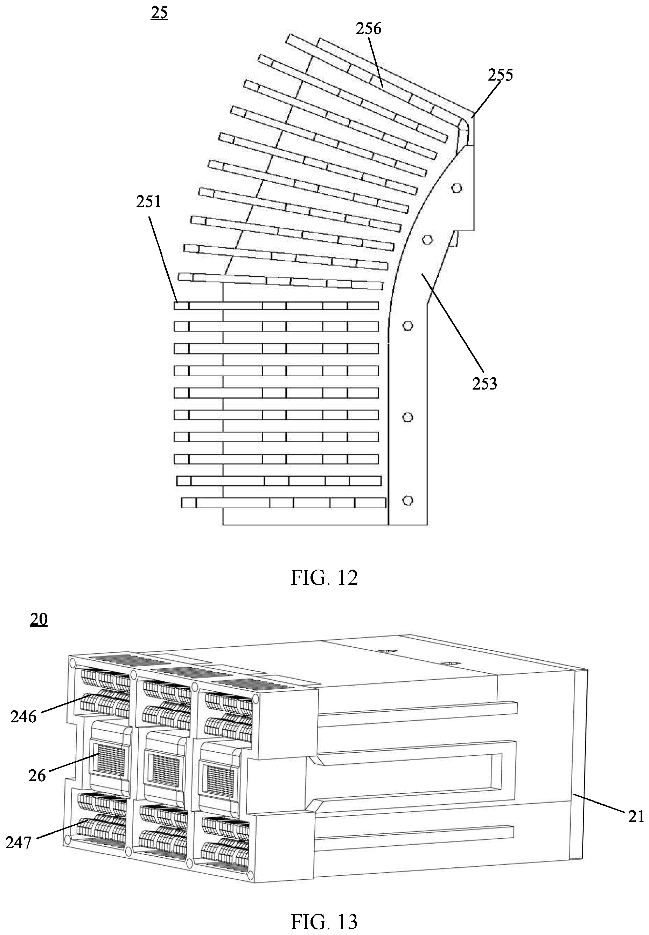

FIG. 6 is another diagram of a circuit breaker according to an embodiment of this application. FIG. 7 is a diagram of a fixed contact component according to an embodiment of this application. As shown in FIG. 6 and FIG. 7, the fixed contact component 242 further includes a first gas-generating plate 2422. The first gas-generating plate 2422 is disposed on the copper busbar of the current-carrying component 24, the fixed contact 2421 is disposed on a surface of a side that is of the first gas-generating plate 2422 and that is close to the arc-quenching sheets 251, and the first gas-generating plate 2422 is configured to form a gas blast toward the arc-jetting vent. In the height h direction of the circuit breaker 20, the fixed contact 2421 is located between the first gas-generating plate 2422 and the plurality of arc-quenching sheets 251, so that the gas blast generated by the first gas-generating plate 2422 can directly blow an electric arc around the fixed contact 2421 to the arc-quenching sheets 251, that is, the electric arc passes through the arc-quenching sheets 251 from a lower right corner of the arc-quenching chamber 25 in FIG. 12 to an upper left corner of the arc-quenching chamber 25, and then enters the arc-extinguishing module 26 through the arc-jetting vent.

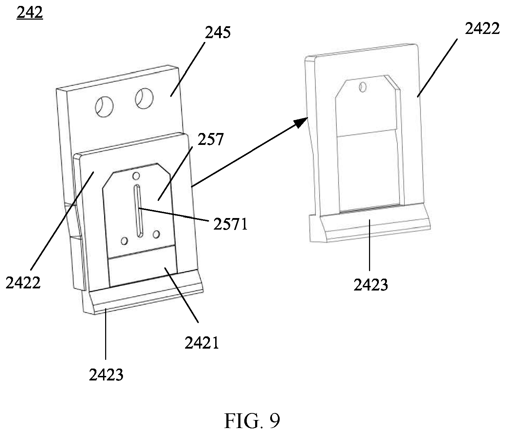

FIG. 8 is another diagram of a fixed contact component according to an embodiment of this application. FIG. 9 is another diagram of a fixed contact component according to an embodiment of this application. As shown in FIG. 8 and FIG. 9, the fixed contact component 242 further includes a second gas-generating plate 2423, where the second gas-generating plate 2423 is disposed on the surface of the side that is of the first gas-generating plate 2422 and that is close to the arc-quenching sheets 251, and the second gas-generating plate 2423 is located, in the depth d direction of the circuit breaker 20, on a side that is of the fixed contact 2421 and that is close to the operating mechanism 23. Therefore, the first gas-generating plate 2422 and the second gas-generating plate 2423 can form a plurality of gas blasts around the fixed contact 2421, increasing effect of blowing an arc by a generated gas. In an embodiment, the first gas-generating plate 2422 and the second gas-generating plate 2423 may be of an integrated structure, thereby simplifying a making process and a mounting process of the fixed contact component 242. When the moving contact 2412 and the fixed contact 2421 are separated, gas blasts are generated from a lower part and a side surface of the fixed contact 2421, so that gas pressure around the fixed contact 2421 increases to blow an electric arc around the fixed contact 2421 to the arc-quenching sheets 251 to extinguish the arc.

As shown in FIG. 5, the current-carrying component 24 further includes a conducting wire 243, a first copper busbar 244, and a second copper busbar 245. The first copper busbar 244 and the second copper busbar 245 are opposite to each other in the height h direction of the circuit breaker 20, and the first copper busbar 244 and the second copper busbar 245 extend in the depth d direction of the circuit breaker 20. In an embodiment, the first copper busbar 244 and the second copper busbar 245 may be located on two sides of the arc-quenching chamber 25. In another embodiment, the first copper busbar 244 and the second copper busbar 245 may alternatively be located on a same side of the arc-quenching chamber 25. An end that is of the first copper busbar 244 and that is close to the operating mechanism 23 is electrically connected to the moving contact 2412 by the conducting wire 243, and an end that is of the first copper busbar 244 and that is away from the operating mechanism 23 is provided with a first connector 246. The fixed contact component 242 is disposed on the second copper busbar 245 and is electrically connected to the second copper busbar 245. An end that is of the second copper busbar 245 and that is away from the operating mechanism 23 is provided with a second connector 247. During specific configuration, the first copper busbar 244 and the second copper busbar 245 each may be fastened to the outer shell 21, where a surface of a side that is of the first copper busbar 244 and that is away from the arc-quenching chamber 25 is attached to an inner wall of the outer shell 21, and a surface of a side that is of the second copper busbar 245 and that is away from the arc-quenching chamber 25 is attached to an inner wall of the outer shell 21. In addition, one end of the conducting wire 243 is electrically connected to the first copper busbar 244, and the other end may be connected to the moving contact 2412.

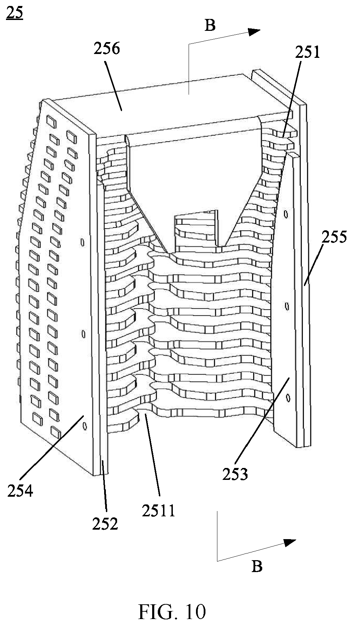

FIG. 10 is a diagram of an arc-quenching chamber according to an embodiment of this application. As shown in FIG. 10, in the arc-quenching chamber 25, the plurality of arc-quenching sheets 251 may be disposed in an arc shape. In the height h direction of the circuit breaker 20, an arc-quenching sheet 251 on a side that is of the plurality of arc-quenching sheets 251 and that is close to the fixed contact 2421 is disposed close to the arc-extinguishing module 26, and an arc-quenching sheet 251 on a side that is of the plurality of arc-quenching sheets 251 and that is away from the fixed contact 2421 is disposed close to the operating mechanism 23. In a process in which the moving contact 2412 rotates relative to the outer shell 21 to be in contact with or be separated from the fixed contact 2421, a moving track of the moving contact 2412 is in an arc shape, and an arrangement shape of the plurality of arc-quenching sheets 251 matches the moving track of the moving contact 2412, so that the moving contact 2412 always keeps a specified distance from the arc-quenching sheets 251 during movement, helping an electric arc pass through the plurality of arc-quenching sheets 251 under the effect of a gas blast, thereby achieving good arc-extinguishing effect.

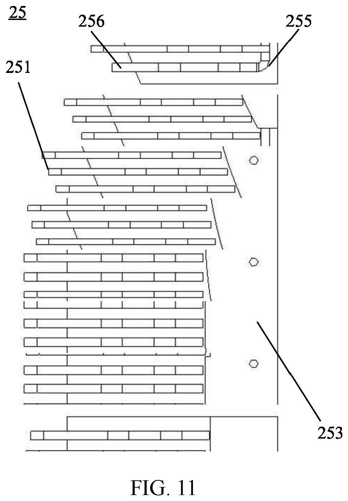

In the arc-quenching chamber 25 in this application, an arrangement manner of the plurality of arc-quenching sheets 251 is not limited. FIG. 11 is a cross-sectional view of the arc-quenching chamber in FIG. 10 in a direction of B-B. As shown in FIG. 11, in an embodiment, the plurality of arc-quenching sheets 251 may be disposed in parallel in the height h direction of the circuit breaker 20. FIG. 12 is another cross-sectional view of the arc-quenching chamber in FIG. 10 in a direction of B-B. As shown in FIG. 12, in another embodiment, the plurality of arc-quenching sheets 251 include at least two arc-quenching sheets 251 close to the arc-jetting vent, and between the two arc-quenching sheets 251, a distance on a side close to the operating mechanism 23 is less than a distance on a side close to the arc-jetting vent.

As shown in FIG. 10, the arc-quenching chamber 25 further includes two gas-generating sheets, that is, a first gas-generating sheet 252 and a second gas-generating sheet 253. The first gas-generating sheet 252 and the second gas-generating sheet 253 are opposite to each other in the width w direction of the circuit breaker 20. The first gas-generating sheet 252 and the second gas-generating sheet 253 separately extend in the height h direction of the circuit breaker 20, and the first gas-generating sheet 252 and the second gas-generating sheet 253 are configured to form gas blasts toward the arc-jetting vent. The moving track of the moving contact 2412 is between the two gas-generating sheets. When the moving contact 2412 rotates relative to the outer shell 21, the moving contact 2412 is always located between the two gas-generating sheets. In this case, in a process in which the moving contact 2412 and the fixed contact 2421 are separated, the first gas-generating sheet 252 and the second gas-generating sheet 253 generate gas blasts under erosion effect of an electric arc, so that the electric arc generated by the moving contact 2412 during separation is always blown to the arc-quenching sheets 251, to extinguish the electric arc.

In an embodiment, the arc-quenching chamber 25 further includes two support plates, that is, a first support plate 254 and a second support plate 255. The first support plate 254 and the second support plate 255 are opposite to each other in the width w direction of the circuit breaker 20, the plurality of arc-quenching sheets 251 are separately connected between the two support plates, and the two support plates are configured to support and fasten the plurality of arc-quenching sheets 251.

Moreover, the arc-quenching chamber 25 further includes two arc-guiding plates. The two arc-guiding plates are disposed opposite to each other on two sides of the plurality of arc-quenching sheets 251 in the height h direction of the circuit breaker 20. One arc-guiding plate is configured to guide an electric arc around the fixed contact 2421 to the arc-quenching sheets 251, and the other arc-guiding plate is configured to guide an electric arc around the moving contact 2412 to the arc-quenching sheets 251, so that the generated electric arcs are guided to the arc-quenching sheets 251 as soon as possible to extinguish the arcs. The two arc-guiding plates may specifically include a first arc-guiding plate 256 and a second arc-guiding plate 257. Specifically, the first arc-guiding plate 256 is disposed away from the fixed contact 2421 and is L-shaped, where the first arc-guiding plate 256 includes a first arc-guiding portion and a second arc-guiding portion that are perpendicular to each other. The first arc-guiding portion and the second arc-guiding plate 257 are disposed opposite to each other on the two sides of the plurality of arc-quenching sheets 251, the second arc-guiding plate 257 is disposed close to the fixed contact 2421, and the second arc-guiding portion extends in the height h direction of the circuit breaker 20 and is disposed close to the operating mechanism 23. In this way, the first arc-guiding plate 256 may be disposed close to the moving track of the moving contact 2412, and the second arc-guiding plate 257 may be disposed close to the fixed contact 2421, so that an electric arc can be guided in time. In an embodiment, the second arc-guiding plate 257 may be disposed on the surface of the side that is of the first gas-generating plate 2422 and that is close to the arc-quenching sheets 251, and the second arc-guiding plate 257 is provided with a gas-generating hole 2571, so that a gas blast generated by the first gas-generating plate 2422 is blown to the arc-quenching sheets 251 through the gas-generating hole 2571.

Still refer to FIG. 10. A side that is of each arc-quenching sheet 251 and that is close to the moving contact component 241 is provided with an arc-guiding notch 2511, and projections of arc-guiding notches 2511 of two adjacent arc-quenching sheets 251 in the height h direction of the circuit breaker 20 do not overlap, so that a path of an electric arc passing through arc-guiding notches 2511 of two adjacent arc-quenching sheets 251 is increased, increasing a length of the electric arc for the electric arc to be in full contact with the arc-quenching sheets 251, thereby helping accelerate cooling and extinction of the electric arc.

In an embodiment, the electric power device 10 further includes a circuit board located in the cabinet 11, the circuit board and the plurality of circuit breakers 20 are disposed sequentially in the depth d direction of the cabinet 11, and the circuit board is disposed close to the arc-extinguishing module 26. The arc-extinguishing module 26 can adsorb electrical free ions jetting from the arc-quenching chamber 25, so that the circuit breaker 20 can implement completely no arc jetting through a gas jetting from the arc-extinguishing module 26, avoiding an adverse impact on the circuit board of the electric power device 10.

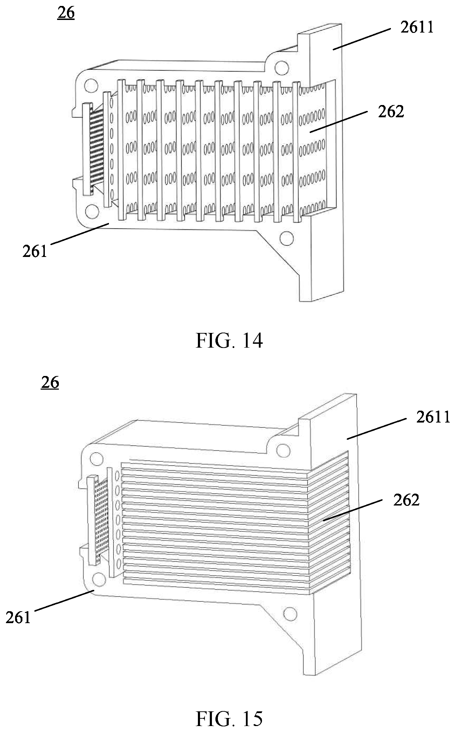

FIG. 13 is a diagram of an arc-extinguishing module according to an embodiment of this application. FIG. 14 is another diagram of an arc-extinguishing module according to an embodiment of this application. As shown in FIG. 13 and FIG. 14, the arc-extinguishing module 26 includes a module housing 261 and a plurality of arc-extinguishing sheets 262 located in the module housing 261. A specific distribution manner of the plurality of arc-extinguishing sheets 262 is not limited. For example, the plurality of arc-extinguishing sheets 262 may be disposed sequentially in the depth d direction of the circuit breaker 20, or the plurality of arc-extinguishing sheets 262 may be disposed sequentially in the height h direction of the circuit breaker 20, or the plurality of arc-extinguishing sheets 262 may be disposed sequentially in the width w direction of the circuit breaker 20. Two adjacent arc-extinguishing sheets 262 may be disposed in parallel, or two adjacent arc-extinguishing sheets 262 may be disposed at an included angle. In addition, when two adjacent arc-extinguishing sheets 262 are disposed in parallel, a distance between any two adjacent arc-extinguishing sheets 262 may be equal, that is, the plurality of arc-extinguishing sheets 262 are disposed equidistantly.

In an embodiment, the plurality of arc-extinguishing sheets 262 are disposed in parallel in the depth d direction of the circuit breaker 20. In other words, the plurality of arc-extinguishing sheets 262 are separately perpendicular to the depth d direction of the circuit breaker 20. Each arc-extinguishing sheet 262 is provided with a plurality of holes, and projections of holes of two adjacent arc-extinguishing sheets 262 in the depth d direction of the circuit breaker 20 do not overlap, to improve a capability of the arc-extinguishing module 26 to adsorb electrical free ions. In addition, in the plurality of arc-extinguishing sheets 262, a diameter of a hole of an arc-extinguishing sheet 262 farthest away from the operating handle 22 may be less than a diameter of a hole of another arc-extinguishing sheet 262, to further improve safety of gas jetting from the arc-extinguishing module 26.

FIG. 15 is another diagram of an arc-extinguishing module according to an embodiment of this application. As shown in FIG. 15, in another embodiment, the plurality of arc-extinguishing sheets 262 are disposed in parallel in the height h direction of the circuit breaker 20. In other words, the plurality of arc-extinguishing sheets 262 are separately perpendicular to the height h direction of the circuit breaker. In this embodiment, the arc-extinguishing sheet 2262 may be provided with the foregoing holes. Alternatively, the arc-extinguishing sheet 2622 may be provided with no holes, and may be made of a material with an adsorption function.

In an embodiment of this application, a type of the arc-extinguishing sheet 262 is not limited. For example, the arc-extinguishing sheet 262 may be a filter screen, a flame-extinguishing sheet, a gas-generating sheet, or a woven mesh plate. In this embodiment, the plurality of arc-extinguishing sheets 262 in the arc-extinguishing module 26 may be arc-extinguishing sheets 262 of a same type, or the plurality of arc-extinguishing sheets 262 in the arc-extinguishing module 26 may be arc-extinguishing sheets 262 of at least two different types. In addition, a material of the plurality of arc-extinguishing sheets 262 may be any one of metal or plastic.

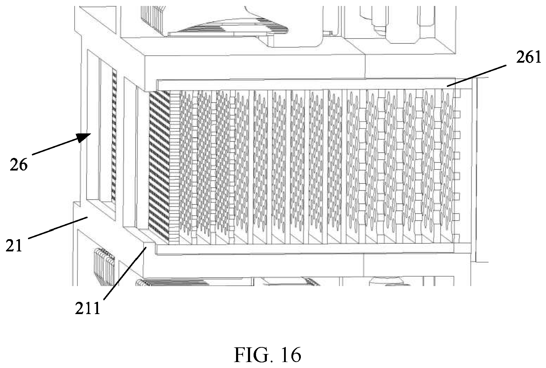

The arc-extinguishing module 26 is an independent module, and the arc-extinguishing module 26 and the outer shell 21 may be connected by a threaded connection, welding, riveting, snap fitting, bonding, or the like. As shown in FIG. 14, in an embodiment, a snap-fitting groove is provided inside the outer shell 21, a snap-fitting protrusion 2611 is provided on an outer wall of the module housing 261, and the snap-fitting protrusion 2611 is accommodated in the snap-fitting groove. In another embodiment, an outer wall of the module housing 261 may be a flat surface, and a bolt is inserted from the outside of the outer shell 21 to fasten the outer shell 21 to the module housing 261. FIG. 16 is another diagram of an arc-extinguishing module according to an embodiment of this application. As shown in FIG. 16, in another embodiment, a limiting protrusion 211 is provided on an inner wall of the outer shell 21. After the arc-extinguishing module 26 is mounted in the outer shell 21, the limiting protrusion 211 can limit the module housing 261.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An electric power device, comprising a cabinet, and a plurality of circuit breakers and a plurality of power modules that are located in the cabinet, wherein the plurality of circuit breakers are disposed sequentially in the cabinet in a width direction of the cabinet, a height direction of the circuit breaker is the same as the width direction of the cabinet, a width direction of the circuit breaker is the same as a height direction of the cabinet, and a depth direction of the circuit breaker is the same as a depth direction of the cabinet;
the circuit breaker comprises an outer shell, an operating handle, an operating mechanism, a current-carrying component, an arc-quenching chamber, and an arc-extinguishing module; the operating handle is connected to the operating mechanism, and the current-carrying component comprises a moving contact component and a fixed contact; a part that is of the operating handle and that is at least close to the operating mechanism, the operating mechanism, the moving contact component, the arc-quenching chamber, and the arc-extinguishing module are disposed sequentially in the outer shell in the depth direction of the circuit breaker, and the fixed contact is located, in the depth direction of the circuit breaker, on a side that is of the moving contact component and that is away from the operating mechanism;
the moving contact component comprises a gas-generating connecting rod and a moving contact, the gas-generating connecting rod is rotatably connected to the outer shell, and the moving contact and the gas-generating connecting rod are relatively fixed;
the operating mechanism is connected to the moving contact component, and the operating handle is configured to control the operating mechanism to drive the gas-generating connecting rod of the moving contact component to rotate relative to the outer shell, for the moving contact and the fixed contact to be in contact or be separated;
the arc-quenching chamber is configured to extinguish an electric arc generated when the moving contact and the fixed contact are separated; the arc-quenching chamber comprises a plurality of arc-quenching sheets disposed sequentially in the height direction of the circuit breaker; the fixed contact is located on one side of the plurality of arc-quenching sheets in the height direction of the circuit breaker; a moving track of the moving contact extends in the height direction of the circuit breaker from the fixed contact to the other side of the plurality of arc-quenching sheets; and
the arc-extinguishing module is configured to purify a gas jetting from the arc-quenching chamber; an arc-jetting vent is provided between the arc-extinguishing module and the arc-quenching chamber, the arc-jetting vent communicates the arc-quenching chamber and the arc-extinguishing module, and the arc-jetting vent is provided close to the other side of the arc-quenching sheets; and the gas-generating connecting rod is configured to form a gas blast toward the arc-jetting vent.

2. The electric power device according to claim 1, wherein the outer shell is provided with a separator plate, the separator plate is located between the operating mechanism and the arc-quenching chamber, and extends in the height direction of the circuit breaker, the separator plate is configured to separate the operating mechanism from the arc-quenching chamber, and the separator plate is provided with an opening; and
an end that is of the gas-generating connecting rod and that is close to the arc-quenching chamber is provided with a baffle plate, and an end of the connecting rod is disposed close to the operating mechanism and is rotatably connected to the outer shell; the baffle plate is located on a side that is of the opening and that is close to the operating mechanism; and the baffle plate is configured to always cover the opening in a process in which the operating mechanism drives the gas-generating connecting rod to rotate relative to the outer shell.

3. The electric power device according to claim 1 or 2, wherein the plurality of arc-quenching sheets are disposed in an arc shape; and in the height direction of the circuit breaker, an arc-quenching sheet on a side that is of the plurality of arc-quenching sheets and that is close to the fixed contact is disposed close to the arc-extinguishing module, and an arc-quenching sheet on a side that is of the plurality of arc-quenching sheets and that is away from the fixed contact is disposed close to the operating mechanism.

4. The electric power device according to any one of claims 1 to 3, wherein the plurality of arc-quenching sheets are disposed in parallel; or
in the plurality of arc-quenching sheets, for at least two arc-quenching sheets close to the arc-jetting vent, a distance that is between the at least two arc-quenching sheets and that is on a side close to the operating mechanism is less than a distance that is between the at least two arc-quenching sheets and that is on a side close to the arc-jetting vent.

5. The electric power device according to any one of claims 1 to 4, wherein the arc-quenching chamber further comprises two gas-generating sheets opposite to each other in the width direction of the circuit breaker, the gas-generating sheet extends in the height direction of the circuit breaker, the two gas-generating sheets are configured to form gas blasts toward the arc-jetting vent, and the moving track of the moving contact is between the two gas-generating sheets.

6. The electric power device according to any one of claims 1 to 5, wherein the arc-quenching chamber further comprises two arc-guiding plates, and the two arc-guiding plates are disposed opposite to each other on two sides of the plurality of arc-quenching sheets in the height direction of the circuit breaker.

7. The electric power device according to claim 6, wherein the two arc-guiding plates comprise a first arc-guiding plate and a second arc-guiding plate, the first arc-guiding plate is disposed away from the fixed contact and is L-shaped, the first arc-guiding plate comprises a first arc-guiding portion and a second arc-guiding portion that are perpendicular to each other, the first arc-guiding portion and the second arc-guiding plate are disposed opposite to each other on the two sides of the plurality of arc-quenching sheets, the second arc-guiding plate is disposed close to the fixed contact, and the second arc-guiding portion extends in the height direction of the circuit breaker and is disposed close to the operating mechanism.

8. The electric power device according to any one of claims 1 to 7, wherein a side that is of each arc-quenching sheet and that is close to the operating mechanism is provided with an arc-guiding notch, and projections of arc-guiding notches of two adjacent arc-quenching sheets in the height direction of the circuit breaker do not overlap.

9. The electric power device according to any one of claims 1 to 8, wherein the current-carrying component further comprises a first gas-generating plate, the fixed contact is disposed on a surface of a side that is of the first gas-generating plate and that is close to the plurality of arc-quenching sheets, and the first gas-generating plate is configured to form a gas blast toward the arc-jetting vent.

10. The electric power device according to claim 9, wherein the current-carrying component further comprises a second gas-generating plate, the second gas-generating plate is disposed on the surface of the side that is of the first gas-generating plate and that is close to the plurality of arc-quenching sheets, and is disposed, in the depth direction of the circuit breaker, on a side that is of the fixed contact and that is close to the operating mechanism, and the second gas-generating plate is configured to form a gas blast toward the arc-jetting vent.

11. The electric power device according to any one of claims 1 to 10, wherein the electric power device further comprises a circuit board located in the cabinet, the circuit board is disposed on a side of the circuit breaker in the depth direction of the cabinet, and the circuit board is disposed close to the arc-extinguishing module.

12. The electric power device according to any one of claims 1 to 11, wherein the arc-extinguishing module comprises a module housing and a plurality of arc-extinguishing sheets located in the module housing; and the plurality of arc-extinguishing sheets are disposed in parallel in the depth direction of the circuit breaker, or the plurality of arc-extinguishing sheets are disposed in parallel in the height direction of the circuit breaker, or the plurality of arc-extinguishing sheets are disposed in parallel in the width direction of the circuit breaker, or at least two of the plurality of arc-extinguishing sheets are disposed at an included angle.

13. The electric power device according to claim 12, wherein the plurality of arc-extinguishing sheets are disposed in parallel in the depth direction of the circuit breaker; and each arc-extinguishing sheet is provided with a plurality of holes, and projections of holes of two adjacent arc-extinguishing sheets in the depth direction of the circuit breaker do not overlap.

14. The electric power device according to any one of claims 1 to 13, wherein the arc-extinguishing module and the outer shell are in a connection, and the connection comprises a threaded connection, snap fitting, riveting, or bonding.

15. A circuit breaker, wherein the circuit breaker comprises an outer shell, an operating handle, an operating mechanism, a current-carrying component, an arc-quenching chamber, and an arc-extinguishing module, wherein
the operating handle is connected to the operating mechanism, and the current-carrying component comprises a moving contact component and a fixed contact; a part that is of the operating handle and that is at least close to the operating mechanism, the operating mechanism, the moving contact component, the arc-quenching chamber, and the arc-extinguishing module are disposed sequentially in the outer shell in a depth direction of the circuit breaker, and the fixed contact is located, in the depth direction of the circuit breaker, on a side that is of the moving contact component and that is away from the operating mechanism;
the moving contact component comprises a gas-generating connecting rod and a moving contact, the gas-generating connecting rod is rotatably connected to the outer shell, and the moving contact and the gas-generating connecting rod are relatively fixed;
the operating mechanism is connected to the moving contact component, and the operating handle is configured to control the operating mechanism to drive the gas-generating connecting rod of the moving contact component to rotate relative to the outer shell, for the moving contact and the fixed contact to be in contact or be separated;
the arc-quenching chamber is configured to extinguish an electric arc generated when the moving contact and the fixed contact are separated; the arc-quenching chamber comprises a plurality of arc-quenching sheets disposed sequentially in a height direction of the circuit breaker; the fixed contact is located on one side of the plurality of arc-quenching sheets in the height direction of the circuit breaker; a moving track of the moving contact extends in the height direction of the circuit breaker from the fixed contact to the other side of the plurality of arc-quenching sheets; and
the arc-extinguishing module is configured to purify a gas jetting from the arc-quenching chamber; an arc-jetting vent is provided between the arc-extinguishing module and the arc-quenching chamber, the arc-jetting vent communicates the arc-quenching chamber and the arc-extinguishing module, and the arc-jetting vent is provided close to the other side of the arc-quenching sheets; and the gas-generating connecting rod is configured to form a gas blast toward the arc-jetting vent.
